(19) Europäisches Patentamt
European Patent Office
Office européen des brevets

(11) EP 0 639 921 B1

## (12) EUROPEAN PATENT SPECIFICATION

(45) Date of publication and mention
of the grant of the patent:
**12.06.1996  Bulletin 1996/24**

(51) Int Cl.⁶: **H04N 3/27**, H04N 3/223

(21) Application number: **93306534.4**

(22) Date of filing: **18.08.1993**

(54) **Deflection apparatus for raster scanned CRT displays**

Ablenkungsvorrichtung für eine nach dem Rasterverfahren arbeitende
Kathodenstrahlanzeigeeinrichtung

Dispositif de déflection pour affichage à balayage de trame

(84) Designated Contracting States:
**DE FR GB**

(43) Date of publication of application:
**22.02.1995  Bulletin 1995/08**

(73) Proprietor: **International Business Machines
Corporation
Armonk, N.Y. 10504 (US)**

(72) Inventor: **Morrish, Andrew John
San Jose, California 95129 (US)**

(74) Representative: **Burt, Roger James, Dr.
IBM United Kingdom Limited
Intellectual Property Department
Hursley Park
Winchester Hampshire SO21 2JN (GB)**

(56) References cited:
**EP-A- 0 398 598            EP-A- 0 510 461**

- **PATENT ABSTRACTS OF JAPAN vol. 8, no. 39
(E-228)(1476) 21 February 1984 & JP-A-58 196
768 (NIPPON DENKI K.K) 16 November 1983**

# Description

The present invention relates to deflection apparatus for enabling a raster scanned CRT display to maintain a constant picture size despite variations in raster line scanning frequency.

Many raster scanned CRT displays are now designed to be compatible with a wide range of computer systems each capable of generating one or more different raster display formats. Each raster display format is generally characterised by a different pair of line and frame scanning frequencies.

A conventional line scan circuit for driving the horizontal deflection coils for a CRT display comprises a ramp generator for producing a line scan current signal in the deflection coils in synchronisation with a raster line synchronisation (sync) signal generated by the host computer. The amplitude of the line scan signal is inversely proportional to the frequency of the line sync signal. Therefore, the width of the picture displayed on the CRT screen is inversely proportional to the frequency of the line sync signal.

In conventional CRT displays that are capable of displaying different raster display formats, a ramp regulator is connected to the ramp generator to reduce the effect of changes in line sync signal frequency on displayed picture width by varying the amplitude of the line scan signal as a function of a reference input and a feedback signal. The feedback signal is generated as a function of the line scan signal by a feedback circuit connected to the ramp generator and the regulator. The feedback circuit conventionally comprises a low pass filter with a time constant that is long enough to remove the line scan frequency component from the feedback signal. The low pass filter therefore limits the range of line scan frequencies within which the display can operate with constant picture width. Furthermore, increasing the time constant of the filter increases the transient response time of the regulator when switching between different display formats.

A deflection apparatus as defined in the preamble of claim 1 is known from EP-A-0 398 598.

In accordance with the present invention, there is now provided deflection apparatus for a raster scanned cathode ray tube display, the apparatus comprising: a ramp generator for receiving a raster synchronisation signal and for producing a raster scan signal synchronized to the raster synchronisation signal; a reference source for generating a reference input; a ramp regulator connected to the generator for varying the amplitude of the scan signal as a function of the difference between the reference input and a feedback signal; and a feedback circuit connected to the generator and to the regulator for generating the feedback signal as a function of the amplitude and frequency of the line scan signal; characterized in that the apparatus further comprises a multiplier connected to the regulator for multiplying the reference input by an integer multiple of the frequency of the raster synchronisation signal.

The present invention stems from a realization that any scan signal frequency component in the feedback signal can be cancelled at the input to the regulator by introducing a scan signal frequency component to the reference input. Therefore, in accordance with the present invention, displayed picture size can now be made independent of scan signal frequency. Deflection apparatus of the present invention can therefore advantageously maintain a constant picture size despite variations in scanning signal frequency without the bandwidth limitations of the prior art.

Preferably, the multiplier comprises a switch circuit connected to the ramp generator for alternating the reference input between greater and lesser reference levels in synchronisation with the raster synchronization signal. The present invention can thus be advantageously implemented without complex low pass filter networks.

In a preferred embodiment of the present invention, the switch circuit is connected to the reference source and to the regulator for alternately connecting and disconnecting the reference source to the regulator in synchronisation with the raster synchronisation signal. The present invention may thus be advantageously implemented by a signal transistor gate in a signal path.

The multiplier may comprise a monostable circuit connected to the switch circuit for generating pulses of predetermined length for switching the switch circuit in synchronization with the raster synchronisation signal. The monostable circuit advantageously alleviates any frequency dependency in the pulse length of the synchronisation signal.

In a preferred embodiment of the present invention to be described shortly, the generator comprises a flyback circuit; and the regulator comprises a switch circuit for varying the voltage across the flyback circuit in response to a pulse width modulated signal, and a pulse width modulator connected to the switch circuit, the multiplier, and the feedback circuit for generating the pulse width modulated signal as a function of said difference between the reference input and the feedback signal.

The integer multiple is preferably greater than one to improve noise rejection. In a preferred embodiment of the present invention, the integer multiple is, for example, set to two.

It will be appreciated that the present invention extends to a CRT display comprising such deflection apparatus.

It will also be appreciated that the present invention extends to a computer system comprising: a processor for generating raster synchronisation signals and for varying the frequency of at least one of the raster synchronisation signals to produce different display modes; and a CRT display as referred to in the preceding paragraph connected to the processor for producing a picture on the display in response to the raster synchronisation signals and for maintaining the size of the picture substantially constant between the different display modes.

A preferred embodiment of the present invention will now be described, by way of example only, with reference to the accompanying drawings in which:

Figure 1 is a block diagram of a CRT display;

Figure 2 is a block diagram of a conventional line scan circuit;

Figure 3 is a block diagram of a line scan circuit of the present invention;

Figure 4 is a circuit diagram of a line scan circuit of the present invention; and

Figure 5 is a side view of a computer system comprising a CRT display having a line scan circuit of the present invention.

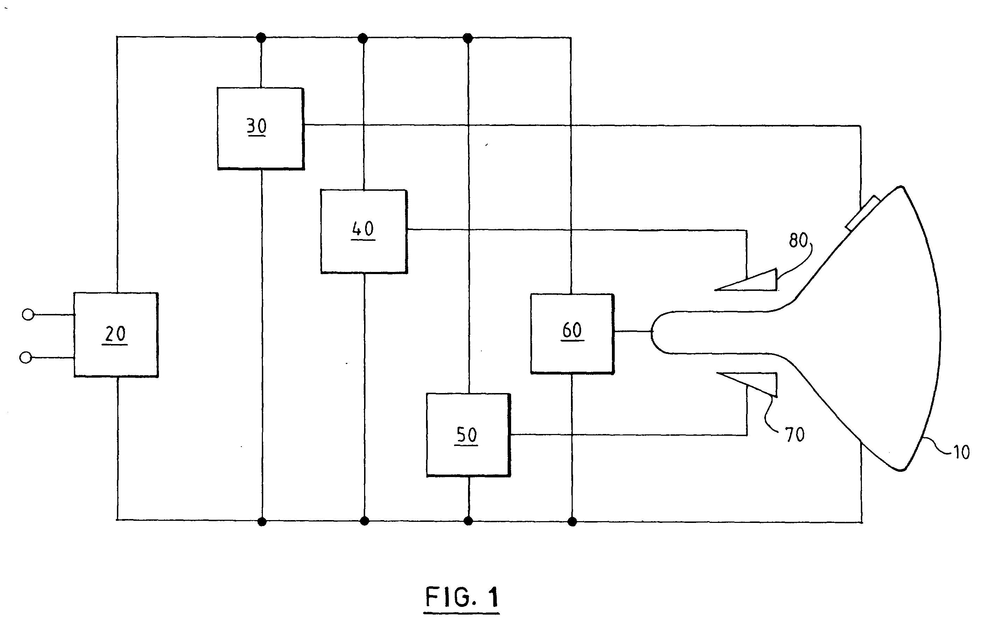

Referring first to Figure 1, a CRT display comprises a Cathode Ray Tube (CRT) 10 connected to an Extra High Tension voltage (EHT) generator 30 and a video amplifier 60. Line and frame deflection coils, 80 and 70 respectively, are disposed around the neck of the CRT 10. Deflection coils 80 and 70 are connected to line and frame scan circuits, 40 and 50, respectively. A power supply 20 is connected via power supply rails to the EHT generator 30, video amplifier 60 and scan circuits 40 and 50.

In operation, EHT generator 30 generates an electric field within CRT 10 for accelerating electrons in beams towards the screen of CRT 10. Line and frame scan circuits 40 and 50 generate line and frame scan currents in deflection coils 70 and 80. The line and frame scan currents are in the form of ramp signals to produce time-varying magnetic fields that scan the electron beams across CRT screen 10 in a raster pattern. The line and frame scan signals are synchronised by line and frame scan circuits 40 and 50 to input line and frame sync signals generated by a host computer system (not shown). Video amplifier 60 modulates the electron beams to produce an output display on CRT 10 as a function of input video signals also generated by the host computer system.

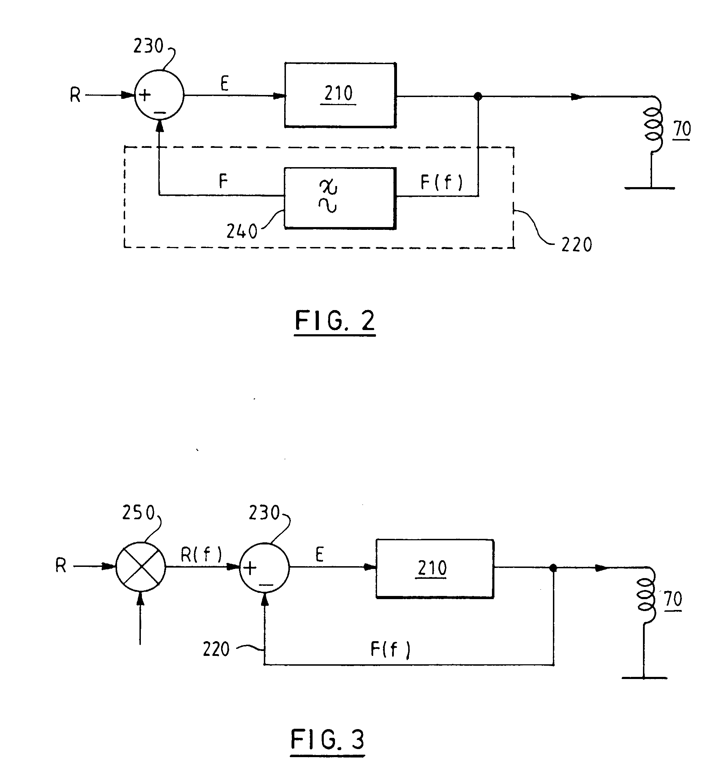

Referring now to Figure 2, a conventional line scan circuit 40, for a CRT display that is capable of displaying different raster display formats, comprises a ramp generator 210 connected to horizontal deflection coils 70. A ramp regulator 230 is connected to the ramp generator. The output of the ramp generator is connected to the input of the ramp regulator 230 via a feedback circuit 220. Feedback circuit 220 comprises a low pass filter 240.

In operation, ramp generator 210 produces a line scan current signal in deflection coils 70. The line scan current signal is synchronized to the line sync signal from the host computer.

Ramp regulator 230 generates an error signal for controlling the amplitude of the line scan current signal and therefore width of picture displayed on CRT 10. The picture width can be adjusted by adjusting a reference input value R.

Feedback circuit 220 provides a feedback signal F derived from the line scan current signal to ramp regulator. Low pass filter 240 removes the line scan frequency component f from the feedback signal F. Error signal E is determined by ramp regulator 230 as a function of the difference between reference value R and feedback signal F.

Ramp generator 210, ramp regulator 230, and feedback circuit 220 therefore constitute a negative feedback control loop that operates to maintain the width of the picture displayed on the CRT constant despite changes in the horizontal scan frequency. However, the range of frequencies over which the feedback loop is capable of operating to maintain the picture width constant is limited by the frequency response of low pass filter 240. Any frequency component of the feedback signal admitted by low pass filter 240 will interfere with the picture width. Furthermore, any increase in the time constant of low pass filter 240, made in an effort to improve the effective range of the feedback loop, will produce a corresponding increase in the transient response of the line scan circuit to changes in display format.

Referring now to Figure 3, in a line scan circuit of the present invention, a multiplier 250 is connected to the input of ramp regulator 230. The introduction of multiplier 250 permits the feedback circuit to deliver the feedback signal F(f) to the ramp regulator without low pass filtering. In operation, multiplier 250 generates output R(f) as a function of the product of R and horizontal frequency f. Because Error Signal E tends to zero by virtue of the negative feedback loop:

$$R(f) - F(f) = E = 0$$

Therefore,

$$R(f) = F(f)$$

Hence

$$R = F.$$

In other words, any line scan frequency component f in the feedback signal F(f) is cancelled at the input of the regulator 230 by the line scan frequency component f introduced by multiplier 250.

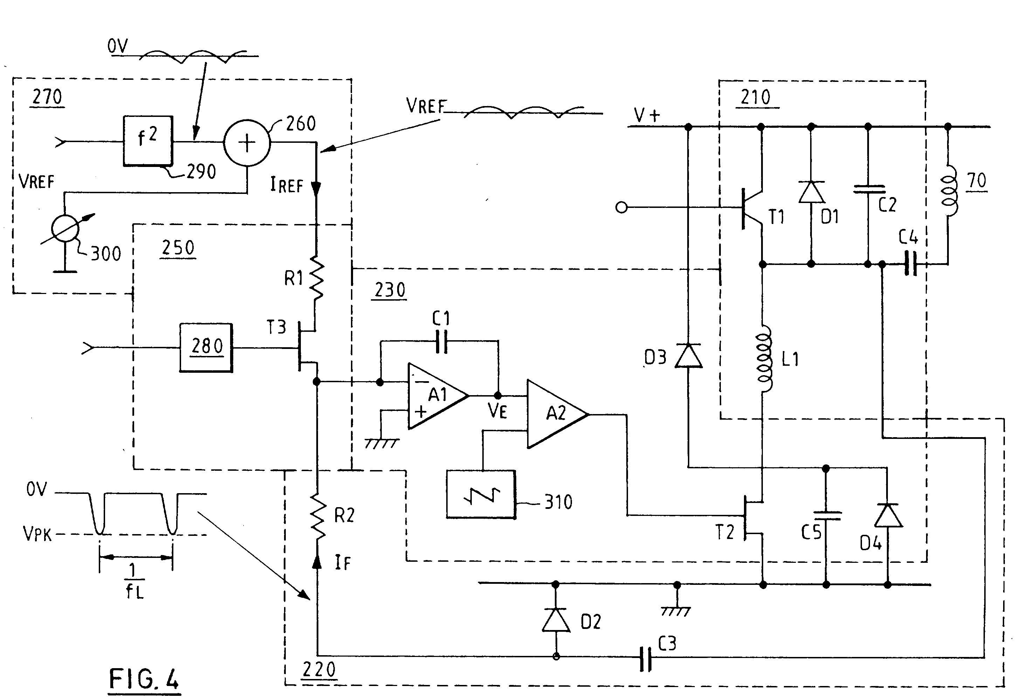

Referring now to Figure 4, in an example of a line scan circuit of the present invention, ramp generator 210 comprises a bipolar transistor T1 connected at its collector to a relatively high voltage rail V+ of the power supply (eg: 120V) and at its emitter to a one terminal of a capacitor C2 and to one terminal of an inductor L1. A diode D1 is connected in reverse biased configuration across the collector emitter junction of T1. The other terminal of C2 is connected to high voltage rail V+. Line deflection coil 80 is connected in series with an S correction capacitor C4 across C2. T1, D1, C2, and L1 collectively form an example of a flyback circuit, the operation of which is well known and will therefore be described only briefly hereinafter. The other terminal of L1 is connected to the drain of a field effect transistor (FET) T2.

Ramp regulator 230 comprises a field effect transistor T2. The source of T2 is connected to ground. A diode D3 is connected between voltage rail V+ and the drain of T2. The gate of T2 is connected to the output of a comparator A2. An integrator, comprising an operational amplifier A1 with a feedback loop formed by a capacitor C1, provides a DC input voltage Ve to A2. The other input of A2 is connected to a voltage ramp signal generator 290.

Feedback circuit 220 comprises a diode D2, a capacitor C3 and a resistor R2 coupling the inverting input of A1 to the emitter of T1.

Multiplier 250 comprises an FET T3 with its source connected to inverting input of A1 at node A and its drain connected to a reference source 260 via a resistor R1. The gate of T3 is connected the output of a monostable circuit 280.

Reference source 270 comprises a summing stage 260 having an output connected to R1. The inputs to summing stage 260 are respectively connected to a function generator 290 and a variable voltage source 300.

In operation, T1 is switched on and off in synchronisation with the line sync signal by a base current signal of period 1/fl, where fl is the frequency of the line sync signal. The base current signal is synchronised to the line sync signal by a phase locked loop (not shown). As the transistor is switched, energy is stored alternately in C2 and L1. The transfer of energy produces a current ramp signal in line deflection coil 80 of period 1/fl. During each retrace portion of the line scan current, a negative-going voltage pulse Vpk is generated at the emitter of T1. The amplitude of the current ramp signal, and therefore the magnitude of Vpk is determined by the mean voltage across L1 during period 1/fl.

In ramp regulator 230, A2, A1, and C1 form a pulse width modulator for generating a square wave voltage signal of period 1/fl to switch T2 in synchronisation with the line sync signal. The pulse width of the square wave voltage signal determines the mean voltage across L1. When T1 is on and T2 is off, the voltage across L1 is negligible because D3 conducts. However, when T1 and T2 are on, the voltage across L1 is near V+ because D3 is reversed biased. A2 determines the pulse width of the signal at the gate of T2 as a function of the difference between voltage Ve at the output of A1 and a voltage ramp signal of period 1/fl generated by voltage ramp signal generator 310 in synchronisation with the line sync signal.

Vpk is DC restored by D2 and C3 of feedback circuit 220 and fed back by the negative feedback loop to the input of ramp regulator 230 at node A, via R2.

In reference source 270, function generator 290 produces a parabolic voltage signal in response to a voltage ramp signal representative of the frame scan current produced by frame scan circuit 40. The parabolic voltage signal determines East-West Pincushion correction for the line scan current. Variable voltage source 300 produces a DC voltage level, Vref, that can be varied to selectively adjust the width of the picture displayed on CRT 10 during, for example, testing of the display. The parabolic voltage signal produced by function generator 290 is superposed on Vref by summing stage 260.

In multiplier 250, monostable circuit 280 generates an output pulse of length tp in response to each pulse of a clock signal. The clock signal is synchronised to the line sync signal by the aforementioned phase locked loop (not shown). The frequency of the clock signal is set to 2fl. T3 is switched by the pulses at the output of the monostable. Reference source 270 is therefore alternately connected and disconnected to the input of ramp regulator 230 in synchronisation with the line sync signal. Specifically, when T3 is on, Vref causes current Iref to flow through R1 to node A. When T3 is off, the current path from summing stage 260 to node A is closed, and Iref does not flow.

Node A is a virtual earth. The feedback control loop constituted by ramp regulator 230 and feedback circuit 220 therefore tends to balance the net currents Iref and If flowing into node A through R1 and R2 respectively.

$$If = \frac{Vpk.tf.fl}{R2.root2}$$

Where tf is the width of each pulse at the emitter of T1 and is determined by the resonance of L1 and C2.

$$If = \frac{Vpk.fl.pi.root(L1.C2)}{R2.root2}$$

$$Iref = \frac{2.fl.Vref.tp}{R1}$$

$$Iref = Ifb$$

Therefore

$$Vpk = \frac{2.fl.tp.Vref.R2.root2}{R1.fl.pi.root(L1.C2)}$$

Thus

$$Vpk = \frac{2.Vref.R2.tp.root2}{pi.R1.root(L1.C2)}$$

Thus, in accordance with the present invention, Vpk and therefore the picture width is made independent of the line scan frequency by multiplying the reference input to ramp regulator 230 by the line scan frequency. The line scan circuit of the present invention can therefore maintain a constant picture width over a greater range of line scan frequencies than conventional line scan circuits.

In the embodiment of the present invention hereinbefore described, the frequency of the clock signal was set by the phase locked loop to twice the line scan frequency. It will now however be appreciated that, in other embodiments of the present invention, the frequency of the clock signal may be set by the phase locked loop to an integer multiple of the line scan frequency greater than or less then two, depending on the degree of noise rejection required. Furthermore, in the embodiment of the present invention hereinbefore described, multiplier 250 multiplied the reference input to ramp generator 230 by alternately disconnecting and connecting reference source 270 to ramp regulator 230 in synchronisation with the line sync signal. However, it will be appreciated that, in other embodiments of the present invention, multiplier 280 may introduce a line scan frequency component to the reference input by, for example, amplitude modulating the output of reference source 270 in synchronisation with the line sync signal. Such amplitude modulation may, for example, involve alternating the output of the reference source between greater and lesser levels in synchronisation with the line sync signal.

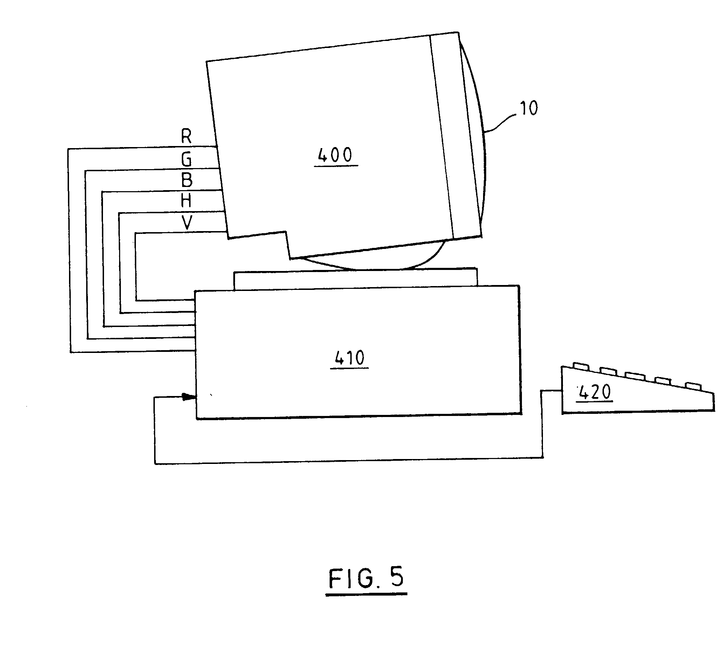

Figure 5 shows a computer system including a CRT display 400 comprising a line scan circuit of the present invention. The computer system comprises a processor 410 connected to the CRT display 400 and to an input device 420 such as keyboard 420. The processor may be in the form of a microcomputer such as an IBM Personal System/2 Model 70 microcomputer (Personal System/2 is a trademark of International Business Machines Corporation) or a mainframe computer. In operation, the CRT display generates a picture in response to Red, Green and Blue, R, G and B, video signals and line and frame, H and V, sync signals generated by the processor. The processor configures the CRT display to operate in different display modes by varying the frequency of one or more of the sync signals. However, in accordance with the present invention, the size of the picture displayed by the CRT display is maintained substantially constant between the different display modes.

**Claims**

1. Deflection apparatus for a raster scanned cathode ray tube display, the apparatus comprising:

   a ramp generator (210) for receiving a raster synchronisation signal and for producing a raster scan signal synchronised to the raster synchronisation signal;
   a reference source (270) for generating a reference input;
   a ramp regulator (230) connected to the generator (210) for varying the amplitude of the scan signal as a function of the difference between the reference input and a feedback signal; and
   a feedback circuit (220) connected to the generator (210) and to the regulator (230) for generating the feedback signal as a function of the amplitude and frequency of the line scan signal; characterised in that the apparatus further comprises a multiplier (250) connected to the regulator for multiplying the reference input by an integer multiple of the frequency of the raster synchronisation signal.

2. Apparatus as claimed in Claim 1, wherein the multiplier (250) comprises a switch circuit (T3) connected to the ramp generator for alternating the reference input between greater and lesser reference levels in synchronisation with the raster synchronisation signal.

3. Apparatus as claimed in a Claim 2, wherein the switch circuit (T3) is connected to the reference source (270) and to the regulator (230) for alternately connecting and disconnecting the reference source to the regulator (230) in synchronisation with the raster synchronisation signal.

4. Apparatus as claimed in Claim 3, wherein the multiplier (250) comprises a monostable circuit (280) connected to the switch circuit (T3) for generating pulses of predetermined length for switching the switch circuit in synchronisation with the raster synchronisation signal.

5. Apparatus as claimed in Claim 4, wherein the generator (210) comprises a flyback circuit (T1); and the regulator (230) comprises a switch circuit (T2) for varying the voltage across the flyback circuit in response to a pulse width modulated signal, and a pulse width modulator (A1, A2, 290) connected to the switch circuit (T2), the multiplier (250), and the feedback circuit (220) for generating the pulse width modulated signal as a function of said difference between the reference input and the feedback signal.

6. Apparatus as claimed in any preceding claim, wherein the integer multiple is greater than one.

7. Apparatus as claimed in any Claim 6, wherein the integer multiple is two.

8. A CRT display comprising deflection apparatus as claimed in any preceding claim.

9. A computer system comprising: a processor for generating raster synchronisation signals and for varying the frequency of at least one of the raster synchronisation signals to produce different display modes; and a CRT display as claimed in claim 8 connected to the processor for producing a picture on the display in response to the raster synchronisation signals and for maintaining the size of the picture substantially constant between the different display modes.

EP 0 639 921 B1

**Patentansprüche**

1. Ablenkungsvorrichtung für eine nach dem Rasterverfahren arbeitende Kathodenstrahlanzeigeeinrichtung, wobei diese Vorrichtung folgendes umfaßt:

    einen Sägezahn-Generator (210) zum Empfangen eines Rastersynchronisationssignals und zum Erzeugen eines mit dem Rastersynchronisationssignal synchronisierten Rasterabtastsignals;

    eine Bezugsquelle (270) zum Erzeugen eines Bezugseingangs;

    einen Sägezahn-Regler (230), der mit dem Generator (210) verbunden ist, zum Verändern der Amplitude des Abtastsignals als eine Funktion der Differenz zwischen dem Bezugseingang und einem Rückkoppelungssignal; und

    eine Rückkoppelungsschaltung (220), die mit dem Generator (210) und mit dem Regler (230) verbunden ist, zum Erzeugen des Rückkoppelungssignals als eine Funktion der Amplitude und der Frequenz des Zeilenabtastsignals;

    dadurch gekennzeichnet, daß die Vorrichtung weiter einen mit dem Regler verbundenen Multiplizierer (250) umfaßt, um den Bezugseingang mit einem ganzzahligen Vielfachen der Frequenz des Rastersynchronisationssignals zu multiplizieren.

2. Vorrichtung nach Anspruch 1, bei der der Multiplizierer (250) einen Schalterkreis (T3) umfaßt, der an den Säge.zahn-Generator angeschlossen ist und den Bezugseingang, synchron mit dem Rastersynchronisationssignal, abwechselnd zwischen höheren und niedrigeren Bezugspegeln schaltet.

3. Vorrichtung nach Anspruch 2, bei der der Schalterkreis (T3) mit der Bezugsquelle (270) und dem Regler (230) verbunden ist, um, synchron mit dem Rastersynchronisationssignal, die Bezugsquelle abwechselnd mit dem Regler (230) zu verbinden und wieder von diesem zu trennen.

4. Vorrichtung nach Anspruch 3, bei der Multiplizierer (250) eine monostabile Schaltung (280) umfaßt, die mit dem Schalterkreis (T3) verbunden ist, zum Erzeugen von Impulsen einer vorbestimmten Länge, um den Schalterkreis, synchron mit dem Rastersynchronisationssignal, zu schalten.

5. Vorrichtung nach Anspruch 4, bei der der Generator (210) eine Rücklaufschaltung (T1) umfaßt; und der Regler (230) einen Schalterkreis (T2) umfaßt, um die Spannung in der Rücklaufschaltung, in Reaktion auf ein impulsbreitenmoduliertes Signal, zu verändern, und einen Impulsbreitenmodulator (A1, A2, 290), der mit dem Schalterkreis (T2), dem Multiplizierer (250), und der Rücklaufschaltung (220) verbunden ist, um das impulsbreitenmodulierte Signal als eine Funktion der genannten Differenz zwischen dem Bezugseingang und dem Rückkoppelungssignal zu erzeugen.

6. Vorrichtung nach einem jeden vorangehenden Anspruch, bei der das ganzzahlige Vielfache größer als Eins ist.

7. Vorrichtung nach Anspruch 6, bei der das ganzzahlige Vielfache Zwei ist.

8. Eine Kathodenstrahl-Anzeigeeinrichtung mit einer Ablenkungsvorrichtung nach einem jeden vorangehenden Anspruch.

9. Ein Rechnersystem, das folgendes umfaßt: einen Prozessor zum Erzeugen von Rastersynchronisationssignalen und zum Verändern der Frequenz von mindestens einem der Rastersynchronisationssignale zur Erzeugung unterschiedlicher Anzeigemodi; und eine Kathodenstrahl-Anzeigeeinrichtung nach Anspruch 8, die mit dem Prozessor verbunden ist, um in Antwort auf die Rastersynchronisationssignale ein Bild auf der Anzeigeeinrichtung zu erzeugen, und um die Größe des Bildes zwischen den unterschiedlichen Anzeigemodi im wesentlichen konstant zu halten.

**Revendications**

1. Appareil de déviation pour un visuel à tube à rayons cathodiques à balayage de trame comprenant:

    un générateur (210) de rampe pour recevoir un signal de synchronisation de trame et pour produire un signal de balayage de trame synchronisé avec le signal de synchronisation de trame;
    une source de référence (270) pour générer une entrée de référence;
    un régulateur de rampe (230) connecté au générateur (210) pour faire varier l'amplitude du signal de balayage en fonction de la différence entre l'entrée de référence et un signal de rétroaction; et
    un circuit de rétroaction (220) connecté au générateur (210) et au régulateur (230) pour générer le signal de rétroaction en fonction de l'amplitude et de la fréquence du signal de balayage de ligne;

6

caractérisé en ce que l'appareil comprend en outre un multiplicateur (250) connecté au régulateur pour multiplier l'entrée de référence par un multiple entier de la fréquence du signal de synchronisation de trame.

2. Appareil selon la revendication 1, dans lequel le multiplicateur (250) comprend un circuit de commutation (T3) connecté au générateur de rampe pour alterner l'entrée de référence entre des niveaux de référence supérieurs et inférieurs en synchronisme avec le signal de synchronisation de trame.

3. Appareil selon la revendication 2, dans lequel le circuit de commutation (T3) est connecté à la source de référence (270) et au régulateur (230) pour alternativement connecter et déconnecter la source de référence au régulateur (230) en synchronisme avec le signal de synchronisation de trame.

4. Appareil selon la revendication 3, dans lequel le multiplicateur (250) comprend un circuit monostable (280) connecté au circuit de commutation (T3) pour générer des impulsions de longueur prédéterminée afin de commuter le circuit de commutation en synchronisme avec le signal de synchronisation de trame.

5. Appareil selon la revendication 4, dans lequel le générateur (210) comprend un circuit de retour du faisceau (T1); et le régulateur (230) comprend un circuit de commutation (T2) pour faire varier la tension aux bornes du circuit de retour du faisceau en réponse à un signal modulé en largeur d'impulsion, et un modulateur (A1, A2, 290) de largeur d'impulsion connecté au circuit de commutation (T2), au multiplicateur (250), et au circuit de rétroaction (220) pour générer le signal modulé en largeur d'impulsion en fonction de ladite différence entre l'entrée de référence et le signal de rétroaction.

6. Appareil selon l'une quelconque des revendications précédentes, dans lequel le multiple entier est supérieur à un.

7. Appareil selon la revendication 6, dans lequel le multiple entier est de deux.

8. Visuel à tube à rayons cathodiques comprenant un appareil de déviation selon l'une quelconque des revendications précédentes.

9. Système d'ordinateur comprenant: un processeur pour générer des signaux de synchronisation de trame et pour faire varier la fréquence d'au moins l'un des signaux de synchronisation de trame afin de produire différents modes d'affichage; et un visuel à tube à rayons cathodiques selon la revendication 8 connecté au processeur pour produire une image sur le visuel en réponse aux signaux de synchronisation de trame et pour maintenir les dimensions de l'image sensiblement constantes entre les différents modes d'affichage.

FIG. 1

FIG. 2

FIG. 3

9

FIG. 4

EP 0 639 921 B1

R
G
B
H
V

400

10

410

420

FIG. 5